# EUROPEAN PATENT SPECIFICATION

(11) **EP 2 219 892 B1**
(45) Date of publication and mention of the grant of the patent: **18.05.2011**
(21) Application number: 08852261.0
(22) Date of filing: 06.11.2008
(51) Int. Cl.: B60C 27/04

(54) **AUTOMOBILE WHEEL ANTI-SKID DEVICE**
GLEITSCHUTZVORRICHTUNG FÜR RAD
DISPOSITIF ANTIDÉRAPAGE POUR AUTOMOBILE

(30) Priority: 06.11.2007 CZ 20070773
(43) Date of publication of application: 25.08.2010
(73) Proprietor: Jakl, Albin, 170 00 Praha 7 (CZ)
(72) Inventor: KNOBLOCH, Rafael, 169 00 Praha 6 (CZ)
(74) Representative: Fischer, Michael
(86) International application number: PCT/CZ2008/000138
(87) International publication number: WO 2009/065365

(56) References cited:
- WO-A-2005/072996
- FR-A- 1 363 320
- FR-A- 2 758 293
- US-B1- 6 341 635

## Description

### Technical field

The invention refers to an anti-skid device for automobile wheels, consisting of central star fitted on outer wheel side, the star being made of hollow spokes with guides for sliding bars to be pushed into the spokes, the sliding bars terminated by yokes embracing the tire of the wheel, the yoke bars provided with clamps for a tightening spring.

### State of art

Current anti-skid devices are used for increasing motor vehicle wheel adhesion, e.g. tightening belts, one end of which embrace the tire and the other end fitted to radial bars, fixed in central element at the outer side of the wheel. Sliding radial bars are fitted in the central element at the outer side of wheel and fixed using mechanical locks or springs. An anti-skid device according to the features of the preamble of claim 1 has been described in patent specification FR 2758293 and includes two flat hollow profiles, joined together with screw and guides, thus forming a cross star. Radial bars are inserted in the ends of each hollow profile, the ends of bars changing into yokes, embracing the tire. Radial bars have clamps for fitting a spring, pushing opposite radial bars into hollow profiles. The cross star may form a single unit, two opposite flat profiles laid one onto another and rectangular and joined using welds. The anti-skid device as described above can be attached on car wheel, without turning the wheel during assembly or moving the car along. The yokes grip with road surface in the area, where the tire is depressed. As the wheel turns, the tire will be depressed, at first, in front of the yoke, then the yoke grips with the road surface. Owing to high circumferential traction force applied on yokes, they become subject to torsion - and so do radial bar-type bars. The torsion force applied on radial the bar causes the bar being not pushed inside the hollow profile as necessary and, consequently, the contact between the yoke and circumferential tire surface will be reduced. Having lost contact with circumferential tire surface, the yoke, being not supported by tire surface, will be subject to torsion at traction movement again, and causes the radial yoke bar being subject to torsion as well. As the bars are constrained in pushing inside and outside of the hollow spokes, the contact between yokes and circumferential tire surface will reduced even more. According to the patent document US 6,341,635 a traction device for attachment to a vehicle tire is known, the traction device including the arms being fixed at their radially proximal end to a first support plate and the arms being fixed ath reir radially proximal end to another support plate. First and second support plates are relatively pivotal about a central point substantially coincident with the axis of rotation for the tire. After positioning the traction device with respect to tire, te first and second support plates are relatively_pivoted to equiangularly dispose the arms around the tire rotation axis. A lock mechanism maintains the realive positoin of the first and second support plates. The document discloses an offset configuration_of_ teh tracting elements in respect to the rotation axis of the tire with the aim to get a more compact tracting device in the collapsed mode. A tithtening spring arranged at clamp portins are not disclosed. The disclosure of the document US 6,341,635 teaches another solution to a different problem. As indicated in specification WO 0147730, there exist an anti-skid device including central element fitted on outers side of the wheel, with longitudinal bars, one end of which is joined with the central element and the other, free, end joined with anti-skid yokes tightly fitting to tire circumference. The ends of bars sliding into the central element have evolvent teeth engaging with the central gear. The central gear is fitted between couples of opposite bars that are shifted tangentially to wheel centre, as the central gear turns. In one direction, the bars tighten anti-skid yokes, press them onto tire surface and loosen them in the opposite direction. In the area between central element and tire circumference, the opposite, free, bar ends, joined with anti-skid yokes, are in the same plane, crossing wheel axis. In the existing wheel anti-skid devices, longitudinal symmetry yoke axes are in the plane crossing wheel axis. The yokes are being pressed onto tire circumference. The contact between yoke and tire surface is flat, the yokes are not fixed strongly enough to the tire surface and are subject to bending due to tangential forces, thus causing torsion of longitudinal bars. Consequently, the ends of bars shifted into the central element get stuck when engaged with the central gear, thus affecting engagement of the bars and the central wheel. The aim of the invention is to rule out this problem and provide an effective and simple anti-skid device featuring radially-arranged hollow spokes, allowing the guides of radial yokes (embracing the tire) being shifted into the guides, the yokes not changing position in traction contact with tire surface

### The essence of the invention

The anti-skid wheel device, as described in this patent specification i.e. central star fitted on outer wheel side and consisting of hollow spokes with guides for sliding bars and yokes embracing the tire, yoke bars being fitted with clamps for the fixing spring and hollow spoke, radial bar and the yoke part adjoining to tire having the same symmetry axis, other than the tire axis, will largely sort out the problems featuring the existing anti-skid devices.

Advantageously, the axis of the yoke adjoining to tire is advanced in wheel turning direction to the plane of wheel axis parallelly with symmetry planes of the hollow spoke, radial bar and yoke. Advantageously, the star consists of at least three hollow spokes, arranged in one plane parallelly with the wheel, the ends of each spoke being fixed to side of the adjacent spoke. Advantageously, the yokes have waveform profiles at sections adjoining to tire surface. Advantageously, the hollow star spoke, bars with clamps and the spring reach into dish-shaped cap, the star and the cap having centre holes for screwed joint. Advantageously, the walls of the dish-shaped cap are thick-walled plastic to provide good grip with the road, the bottom of the cap having lugs reaching into sectors between adjacent spokes and the cap diameter being smaller than that of the tire. The anti-skid device as described herein is able of transmitting high traction forces between the wheel and the road, since the yokes grip efficiently with the road surface, since longitudinal symmetry axes of the hollow spoke of the star, radial bar and the yoke are in one plan, other than the wheel axis. When depressed, the yokes do not loose contact with the tire. Since the symmetry axes of yokes, radial bars and hollow star spokes are in the same plane, radial bars, being depressed, slide easily inside/outside the spoke, when the tire depressed/loosened. Since the symmetry axis of the yoke adjoining to tire is advanced in wheel turning direction to the plane of wheel axis parallelly with symmetry planes of the hollow spoke, radial bar and yoke, one side of the yoke will be more distant from tire circumference and the other side will be more strongly pressed into the tire surface, than with the anti-skid devices currently used. In the anti-skid device, the yoke grips like a blade into road surface at traction grip and the other side of the yoke will be pressed onto the tire, thus fixing yoke position on tire surface. The central star is flat and of low thickness, consisting of hollow spokes arranged in one plane parallelly with the wheel, ends of each spoke being fixed to the adjacent spoke. The arrangement of hollow spokes of the central star as described herein allows radial spokes to be shifted up to the radial coming from wheel axis, perpendicularly to shifting direction. This is of particular importance, if the wheel is strongly depressed. The anti-skid device according to claim 4 significantly improves transmission of lateral forces between wheel and road surface, avoiding yoke torsion. The anti-skid device according to claims 5, 6 enables covering mechanical components at outer wheel side, prevent dirt, earth and/or snow to penetrate to wheel disc from outside of the wheel. The anti-skid device according to claim 7 improves driving properties of the car in extreme conditions on roads with weak surface. The anti-skid device according to the invention can be easily and reliably fitted onto the tire, easily fitted at loaded vehicle, is reliable and safe. Even if the wheels are burrowed deep in the soil, anti-skid device can be fitted on the remaining surface of the wheel. Considering small size, low weight and easy maintenance, the anti-skid device can be included in all-year accessories of any motor vehicle category. The anti-skid device appropriately covers mechanical components and prevents dirt, earth and snow from entering into these components and the wheel disc. Dish-shaped cap can be advantageously fitted on radial bar clamps. The anti-skid device as described herein can be easily fitted and individual components are easy to store.

### Figures on drawings

The anti-skid device of a motor vehicle is illustrated by means of drawings, the figures representing Fig. 1 Front view and sectional view of the wheel with fitted four-spoke anti-skid device as described in the invention. Fig. 2 Five-spoke anti-skid device as described in the invention. Fig. 3 Three-spoke central star of the device as described in the invention. Fig. 4 Cap of the anti-skid device as described in the invention. Fig. 5 Outer drum of the anti-skid device as described in the invention.

### Examples of construction

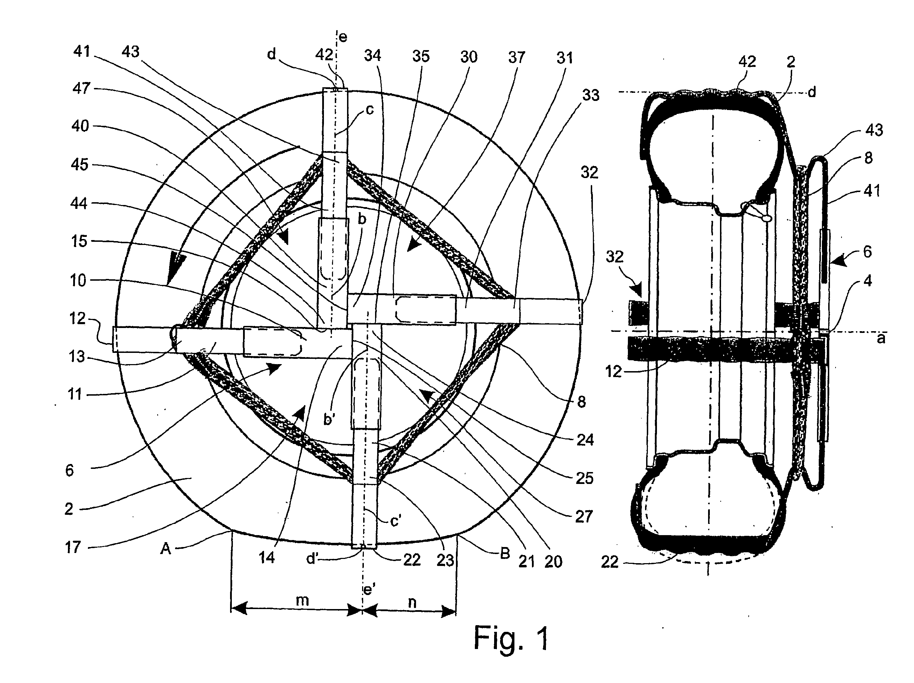

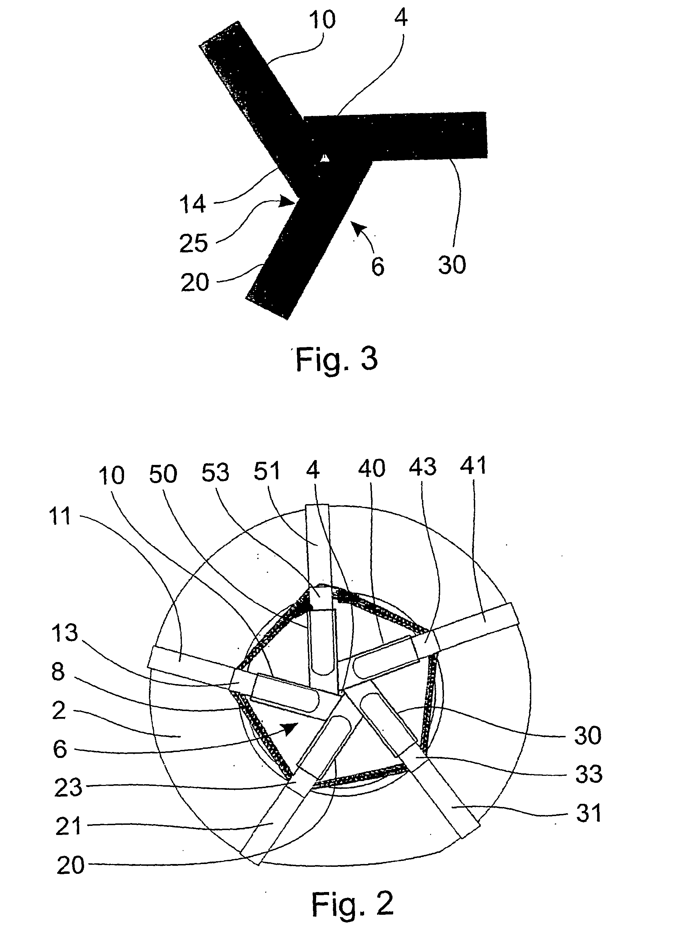

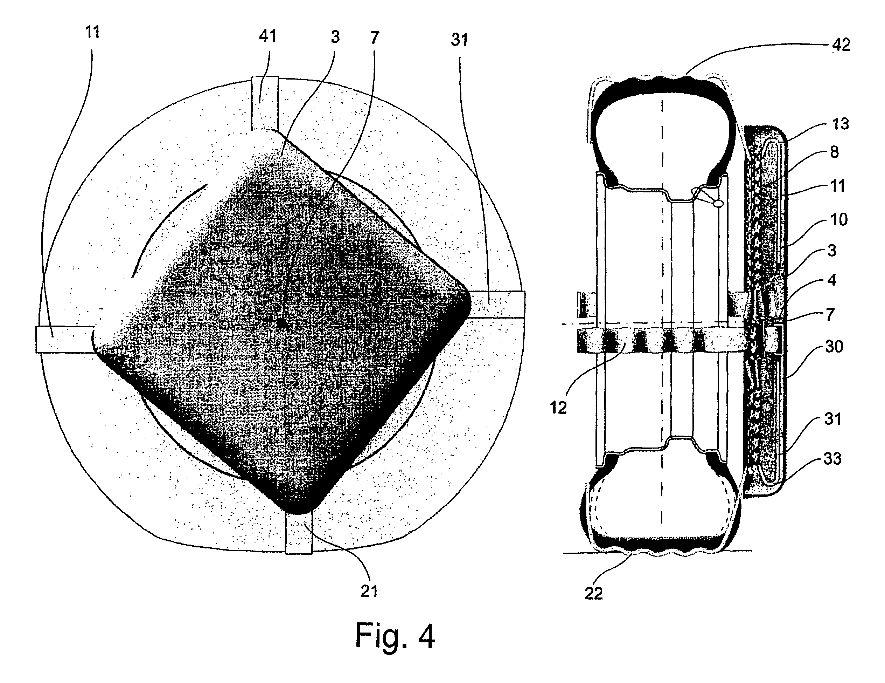

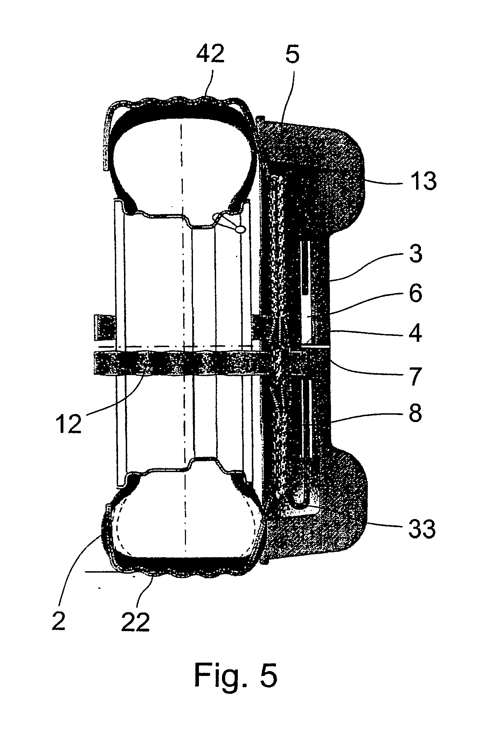

The anti-skid device of a motor vehicle, as shown in Fig. 1, includes a star 6, having (*for example*) four spokes 10, 20, 30, 40, making angle 90°. The spaces between spokes 10, 20, 30, 40 are sectors 17, 27, 37, 47. Spokes 10, 20, 30, 40 are of rectangular, transversal profile, hollow, with bars 11, 21, 31, 41, sliding inside the profiles. The bars are made (*for example*) from hoop steel. The bars 11, 21, 31, 41 slide freely inside the spokes 10, 20, 30, 40 of the star 6. The bars 11, 21, 31, 41 reaching out of the spokes 10, 20, 30, 40 change into yokes 12, 22, 32, 42 via clamps 13, 23, 33, 43, the yokes embracing the tire 2 of the wheel. The clamps 13, 23, 33, 43 are provided by shaping the bars 11, 21, 31, 41 in radial and axial direction to produce a bend for fitting fixation spring 8. The clamps 13, 23, 33, 43 can have any shape, e.g. axial lugs, however, they must provide radial support for fixing the spring 8. The spring 8, advantageously, is normal tightening rope, which can be endless or can have hooks on its ends to lock on the bars 11, 21, 31, 41. The spring 8 provides fixation of the anti-skid device on wheel tire. The bars 11, 21, 31, 41 change into clamps 13, 23, 33, 43 and then into yokes 12, 22, 32, 42, which frontal part adjoining to the tire 2 and the other part exceeding the circumference and embracing the tire 2 from inside. On the frontal view (fig. 1), a part of yokes 12, 22, 32, 42 adjoining to the tire 2 (depicted using dashed line on the frontal view at bar ends 11, 21, 31, 41. On the vertical sectional view (Fig. 1), part of yokes 12, 22, 42 adjoining to the tire 2 has waveform profile. The section of yoke 32 is shaped as well (however, it cannot be seen in the sectional view (Fig. 1). Longitudinal axes a, b and c of hollow spokes 10, 20, 30, 40 of the star 6, radial bars 11, 21, 31, 41 and parts of yokes 12, 22, 32, 42, adjoining to the tire 2, are in the plane e and go outside the axis of the tire 2. The axis d of a part of yokes 12, 22, 32, 42 adjoining to the tire 2 is advanced in the wheel turning direction compared with the plane of the axis and tire 2, parallelly with the symmetry plane e of hollow spokes 10, 20, 30, 40, radial bars 11, 21, 31, 41 and yokes 12, 22, 32, 42. The star 6 is made of at least three hollow spokes 10, 20, 30, 40, arranged parallelly with the wheel, the ends 14, 24, 34, 44 of each hollow spoke 10, 20, 30, 40 is fixed to sides 15, 25, 35, 45 of the adjacent spokes 20, 30, 40, 10. When assembling the anti-skid device, the bars 11, 21, 31, 41 shall be pushed into the spokes 10, 20, 30, 40 of the star 6, then the star 6 shall be placed at the outer wheel side, the yokes 12, 22, 32, 42 shall be locked into the tire 2, the bars 11, 21, 31, 41 shall be pushed deeper into the spokes 10, 20, 30, 40 and the spring 8 shall be drawn along the clamps 13, 23, 33, 43. By means of the tension produced by the spring, the bars 11, 21, 31, 41 will be pushed into the spokes 10, 20, 30, 40, while the yokes 12, 22, 32, 42 will be held on the tire. The wheel turning in the direction shown by the arrow (Fig. 1), the tire will be pressed onto the road. The contact surface is symmetric with the plane going through the axis and the wheel perpendicularly to the road surface. Longitudinal symmetry axes b', c' of the spoke 24 and the bar 23 are out of the wheel axis a. Being in position, the axes of the yoke 22, bar 23 and spoke 24 are in plane e', perpendicularly to the road surface, the yoke 22 adjoining to the tire 2 out of the centre of the contact surface of the wheel and the road. The distance n between longitudinal axis of the yoke 22, adjoining to the tire 2, and point B of the contract surface in wheel turning direction is shorter than the distance to point A of the contact surface in the opposite direction. Owing to advanced arrangement of spokes, the yoke will be deflected from tire's tangent line at the point of contact with the tire. Hence, the front side of the yoke, when driving, will be pressed into the road surface and the other side of the yoke will be pressed into tire surface. Fig. 2 (front view) shows the star 6 with five spokes 10, 20, 30, 40, 50 with bars 11, 21, 31, 41, 51 pushed inside. The spring 8 is drawn along the clamps 13, 23, 33, 43, 53, pushing the bars 11, 21, 31, 41, 51 into the spokes 10, 20, 30, 40, 50. The ends of the bars, can be joined with the adjacent spokes, *for example,* by welding. Fig. 2 shows the end 14 of the spoke 10 joined to the side 25 of the spoke 20. Fig. 3 shows design of the star 6 with three spokes 10, 20, 30 and joints of spoke end with side of the adjacent spoke. E.g. joint of the end 14 of the spoke 10 with the side 25 of the adjacent spoke 20 in one turning direction. Fig. 4 shows the star 6 with hollow spokes 10, 30 bars 11, 31 with clamps 13, 33 for fitting the tightening spring 8. Hollow spokes 10, 30 of bars 11, 31 with clamps 13, 33 reach into dish-shaped cap 3, the star 6 and the cap 3 having centre holes 4, 7 for screwed joint. Fig. 5 shows the wall 5 of dish-shaped cap 3 made of thick-walled plastic to grip with road surface, the bottom 3 of the cap having lugs reaching into sectors 17, 27, 37, 47 between adjacent spokes 10, 20, 30, 40 of the star 6, as shown on Fig. 1. The star 6 has an opening 4 and the other concentric opening 7 is in the bottom of the cap 3. Both openings are intended for screwed joint of the components (i.e. the star 6 and the cap 3).

## Claims

1. anti-skid device for automobile wheels, including a central star (6) fitted on the outer wheel side and made by hollow spokes (10, 20, 30, 40) with profiles for sliding bars (11, 21, 31, 41), ended by yokes (12, 22, 32, 42) embracing a tire (2) of the wheel, the bars (11, 21, 31, 41) of the yokes (12, 22, 32, 42) having clamps (13, 23, 33, 43) for a tightening spring (8),
**characterized in that**
the hollow spokes (10, 20, 30, 40) of the star (6), the radial bars (11, 21, 31, 41) and parts of yokes (12, 22, 32, 42) adjoining to circumferential surface of the tire (2), with longitudinal symmetry axes (b, c, d) being in one symmetry plane (e) out the axis (a) of the tire (2) of the wheel.

2. anti-skid device for automobile wheels according to the claim 1,
**characterized in that**
symmetry axis (d) of part of yokes (12, 22, 32, 42) adjoining to the tire (2) is advanced in wheel turning direction in respect to the plane passing through the axis (a) of the tire (2) parallelly with symmetry axis (e) of the hollow spoke (10, 20, 30, 40) and radial bar (11, 21, 31, 41) and the yoke (12, 22, 32, 42).

3. anti-skid device for automobile wheels according to the claim 1,
**characterized in that**
the star (6) made of at least three hollow spokes (10, 20, 30, 40) arranged in one plane parallel with the tire (1), whereas the end (14, 24, 34, 44) of each hollow spoke (10, 20, 30, 40) fixed on the side (15, 25, 35, 45) of adjacent spoke (20, 30, 40, 10).

4. anti-skid device for automobile wheels according to one of the claims 1 through 3,
**characterized in that**
yokes (12, 22, 32, 42) having waveform profile at sections adjoining to the circumferential surface of the tire (2).

5. anti-skid device for automobile wheels according to one of the claims 1 through 4,
**characterized in that**
the star (6) with hollow spokes (10, 20, 30, 40), bars (11, 21, 31, 41) with clamps (13, 23, 33, 43) and tightening spring (8) reaching into dish-shaped cap (3), the star (6) and dish-shaped cap (3) provided with central holes (4, 7) for mutual screwed joint.

## Patentansprüche

1. Antirutschvorrichtung für Autoräder, beinhaltend einen mittigen auf der Radaußenseite angeordneten Radstern (6), der aus Hohlarmen (10, 20, 30, 40) mit Führungen zum Einschieben der Träger (11, 21, 31, 41) besteht, die mit den die Radreifen (2) umspannenden Klammern (12, 22, 32, 42)beendet sind, wobei die Träger (11, 21, 31, 41) der Klammern (12, 22, 32, 42) mit Fangvorrichtungen (13, 23, 33, 43) für eine Spannfeder (8) versehen sind,
**gekennzeichnet dadurch, dass** der Hohlarm (10, 20, 30, 40) des Sterns (6), der radiale Träger (11, 21, 31, 41) und der Teil der an den Reifenumfang (2) anliegenden Klammer (12, 22, 32, 42,) mit ihren Symmetrielängsachsen (b, c, d) in einer Symmetrieebene (e) liegen, die windschief der Achse (a) des Radreifens (2) verläuft.

2. Antirutschvorrichtung für Autoräder gemäß Anspruch 1, **gekennzeichnet dadurch, dass** die Symmetrieachse (d) des an den Reifenumfang (2) anliegenden Teils der Klammer (12, 22, 32, 42) in Raddrehrichtung gegenüber der Ebene, die durch die Achse (a) des Radreifens (2) parallel zur Symmetrieebene (e) des Hohlarms (10, 20, 30, 40), des radialen Trägers (11, 21, 31, 41) und der Klammer (12, 22, 32, 42) verläuft, vorgesetzt ist.

3. Antirutschvorrichtung für Autoräder gemäß Anspruch 1, **gekennzeichnet dadurch, dass** der Stern (6) aus mindestens drei Hohlarmen (10, 20, 30, 40) besteht, die in einer zum Rad (1) parallelen Ebene angeordnet sind, wobei das Ende (14, 24, 34, 44) jedes Hohlarms (10, 20, 30, 40) fest mit der Seite (15, 25, 35, 45) des Nachbararms (20, 30, 40, 10) verbunden ist.

4. Antirutschvorrichtung für Autoräder gemäß einer der Ansprüche 1 bis 3,
**gekennzeichnet dadurch, dass** die Klammern (12, 22, 32, 42) in den zur Umfangsfläche des Reifens (2) anliegenden Teilen ein gewelltes Profil haben.

5. Die Antirutschvorrichtung für Autoräder gemäß einer der Ansprüche 1 bis 4,
**gekennzeichnet dadurch, dass** der Stern (6) mit den Hohlarmen (10, 20, 30, 40), die Träger (11, 21, 31, 41) mit den Fangvorrichtungen (13, 23, 33, 43) und die Spannfeder (8) in die Abdeckscheibe (3) eingreifen, wobei der Stern (6) und die Abdeckscheibe (3) mit Mittelöffnungen (4, 7) für die gegenseitige Schraubverbindung versehen sind.

## Revendications

1. Dispositif d'anti-patinage des roues de voiture, comprenant une étoile centrale (6) placée sur l'extérieur de la roue et formée de bras creux (10, 20, 30, 40) équipés de guides permettant d'y introduire des supports (11, 21, 31, 41) terminés par des étriers (12, 22, 32, 42) enserrant la jante (2) de la roue, en sachant que les supports (11, 21, 31, 41) des étriers (12, 22, 32, 42) sont munis d'attaches (13, 23, 33, 43) destinées à un ressort de serrage (8),
se distinguant par le fait que
le bras creux (10, 20, 30, 40) de l'étoile (6), le support radial (11, 21, 31, 41) et la partie de l'étrier (12, 22, 32, 42) qui repose sur le pourtour de la jante (2) se trouvent, par leurs axes de symétrie longitudinaux (b, c, d), dans un seul plan de symétrie (e) passant lui-même hors de l'axe (a) de la jante (2) de la roue.

2. Dispositif d'anti-patinage des roues de voiture en fonction de la revendication 1,
se distinguant par le fait que
l'axe de symétrie (d) de la partie de l'étrier (12, 22, 32, 42) qui repose sur le pourtour de la jante (2) est décalé vers l'avant dans le sens de rotation de la roue, par rapport au plan passant par l'axe (a) de la jante (2) parallèlement au plan de symétrie (e) du bras creux (10, 20, 30, 40) et du support radial (11, 21, 31, 41) et de l'étrier (12, 22, 32, 42).

3. Dispositif d'anti-patinage des roues de voiture en fonction de la revendication 1,
se distinguant par le fait que
l'étoile (6) est formée d'au moins trois bras creux (10, 20, 30, 40) agencés dans un plan unique, parallèlement à la roue (1), en sachant que l'extrémité (14, 24, 34, 44) de chaque bras creux (10, 20, 30, 40) est raccordé de manière fixe au côté (15, 25, 35, 45) du bras voisin (20, 30, 40, 10).

4. Dispositif d'anti-patinage des roues de voiture en fonction d'une des revendications 1 à 3,
se distinguant par le fait que
les étriers (12, 22, 32, 42) ont un profil ondulé dans les parties qui reposent sur la surface du pourtour de la jante (2).

5. Dispositif d'anti-patinage des roues de voiture en fonction d'une des revendications 1 à 4,
se distinguant par le fait que
l'étoile (6) à bras creux (10, 20, 30, 40), les supports (11, 21, 31, 41) équipés de leurs attaches (13, 23, 33, 43) et le ressort de serrage (8) empiètent sur le fourreau de protection en forme de cuvette (3), en sachant que l'étoile (6) et le fourreau de protection en forme de cuvette (3) sont équipés d'orifices centraux (4, 7) permettant de les visser l'un à l'autre.
